# EUROPEAN PATENT APPLICATION

(11) **EP 4 815 049 A2**
(43) Date of publication of application: **30.09.2026**
(21) Application number: 26165806.6
(22) Date of filing: 18.03.2026
(51) Int. Cl.: H01M 4/24, H01M 4/36, H01M 4/38, H01M 4/42, H01M 4/52, H01M 4/04, H01M 10/28, H01M 10/34, H01M 4/32

(54) **ALKALINE SECONDARY BATTERY, NICKEL HYDROGEN SECONDARY BATTERY, AND PRODUCTION METHODS THEREFOR**

(30) Priority: 25.03.2025 JP 2025049533
(71) Applicant: FDK Corporation, Tokyo 108-8212 (JP)
(72) Inventor: YAMANE, Tetsuya, Tokyo, 1088212 (JP); TSUZUKI, Ko, Tokyo, 1088212 (JP); TANIMOTO, Yuya, Tokyo, 1088212 (JP)
(74) Representative: Hoefer & Partner Patentanwälte mbB

(57) **Abstract**

[Problem] An object of the present invention is to provide an alkaline secondary battery capable of preventing a decrease in capacity due to addition of an ytterbium compound, and production methods therefor.

[Solution] There is provided an alkaline secondary battery including: a positive electrode containing nickel hydroxide as an active material; a negative electrode; and an alkaline electrolyte solution, in which the positive electrode contains 3.0 wt% or more of an ytterbium compound with respect to the nickel hydroxide, Mn is solid-dissolved in the nickel hydroxide, and an amount of the electrolyte solution is 1.5 mL/Ah or more with respect to a capacity of the positive electrode.

## Description

### TECHNICAL FIELD

The present invention relates to an alkaline secondary battery, a nickel hydrogen secondary battery, and production methods therefor.

### BACKGROUND ART

An alkaline secondary battery is used in various applications, and a long life is required for long-term reliability and reduction in replacement frequency of a battery pack.

The alkaline secondary battery is used in various applications. For example, it is used as a backup power supply or an in-vehicle power supply in industrial applications. In these industrial applications, use in a wide temperature range from a high temperature to a low temperature is required.

In general, when a secondary battery having an aqueous electrolyte solution is charged in a high temperature environment, charging acceptability decreases. Therefore, efforts have been made to improve the charging acceptability by adding a compound of yttrium (Y), ytterbium (Yb), erbium (Er), and the like to a positive electrode.

The yttrium compound, the ytterbium compound, the erbium compound, and the like have an action of preventing corrosion of a hydrogen storage alloy. In Patent Literatures 1, 2, and 3, these compounds are added to a positive electrode and a negative electrode to extend the life of a battery.

As a method for extending the life of a battery, addition of Mn to the battery is also known. In Patent Literatures 4 and 5, it is proposed to contain Mn to improve a solution retention performance of an electrolyte solution in a separator, to prevent consumption of the electrolyte solution, and to extend the life.

### CITATION LIST

### PATENT LITERATURE

Patent Literature 1: JPH05-28992A (see paragraphs [0011], [0025])
Patent Literature 2: JPH06-215765A (see paragraph [0007])
Patent Literature 3: JPH09-92279A (see paragraph [0016])
Patent Literature 4: JP2005-142146A (see paragraph [0019])
Patent Literature 5: JP2002-42861A (see paragraph [0040])

### SUMMARY OF INVENTION

As a result of intensive studies on the extension of the life of an alkaline secondary battery, the present inventors have found that when an ytterbium compound is excessively added to the alkaline secondary battery, a decrease in capacity of an active material of a positive electrode increases when the alkaline secondary battery is used under conditions of being left in a high temperature environment.

Even when corrosion of an electrode can be prevented by the addition of the ytterbium compound, a life extension effect of the ytterbium compound is canceled by the decrease in capacity.

The present invention has been made in view of such circumstances, and an object of the present invention is to provide an alkaline secondary battery and a nickel hydrogen secondary battery capable of preventing a decrease in capacity due to addition of an ytterbium compound, and production methods therefor.

In order to solve the above problems, the alkaline secondary battery, the nickel hydrogen secondary battery, and the production methods therefor according to the present invention include the following means.

According to a first aspect of the present invention, there is provided an alkaline secondary battery including:
a positive electrode containing nickel hydroxide as an active material;
a negative electrode; and
an alkaline electrolyte solution, in which
the positive electrode contains 3.0 wt% or more of an ytterbium compound with respect to the nickel hydroxide,
Mn is solid-dissolved in the nickel hydroxide, and
an amount of the alkaline electrolyte solution is 1.5 mL/Ah or more with respect to a capacity of the positive electrode.

According to a second aspect of the present invention, there is provided the alkaline secondary battery according to the first aspect, in which an active material of the negative electrode is either a hydrogen storage alloy or a combination of zinc and zinc oxide.

According to a third aspect of the present invention, there is provided the alkaline secondary battery according to the first aspect, in which an active material of the negative electrode is a hydrogen storage alloy containing no Mn.

According to a fourth aspect of the present invention, there is provided the alkaline secondary battery according to any one of the first to third aspects, in which the positive electrode contains 5.0 wt% or less of the ytterbium compound with respect to the nickel hydroxide, and
the amount of the alkaline electrolyte solution is 3.0 mL/Ah or less with respect to the capacity of the positive electrode.

According to a fifth aspect of the present invention, there is provided a nickel hydrogen secondary battery including:
a positive electrode containing nickel hydroxide as an active material;
a negative electrode containing a hydrogen storage alloy as an active material; and an alkaline electrolyte solution, in which
the positive electrode contains 3.0 wt% or more of an ytterbium compound with respect to the nickel hydroxide,
the negative electrode contains Mn, and
an amount of the alkaline electrolyte solution is 1.5 mL/Ah or more with respect to a capacity of the positive electrode.

According to a sixth aspect of the present invention, there is provided the nickel hydrogen secondary battery according to the fifth aspect, in which the hydrogen storage alloy contains no Mn.

According to a seventh aspect of the present invention, there is provided the nickel hydrogen secondary battery according to the fifth or sixth aspect, in which the positive electrode contains 5.0 wt% or less of the ytterbium compound with respect to the nickel hydroxide, and
the amount of the alkaline electrolyte solution is 3.0 mL/Ah or less with respect to the capacity of the positive electrode.

According to an eighth aspect of the present invention, there is provided a method for producing an alkaline secondary battery including a positive electrode containing nickel hydroxide as an active material, a negative electrode, and an alkaline electrolyte solution, the method including:
preparing a positive electrode slurry by adding 3.0 wt% or more of an ytterbium compound to the nickel hydroxide in which Mn is solid-dissolved;
preparing the positive electrode by coating or filling a conductive core material with the positive electrode slurry; and
injecting the alkaline electrolyte solution such that an amount of the electrolyte solution is 1.5 mL/Ah or more with respect to a capacity of the positive electrode.

According to a ninth aspect of the present invention, there is provided the method for producing an alkaline secondary battery according to the eighth aspect, in which either a hydrogen storage alloy or a combination of zinc and zinc oxide is used as an active material of the negative electrode.

According to a tenth aspect of the present invention, there is provided the method for producing an alkaline secondary battery according to the eighth aspect, in which a hydrogen storage alloy containing no Mn is used as an active material of the negative electrode.

According to an eleventh aspect of the present invention, there is provided the method for producing an alkaline secondary battery according to any one of the eighth to tenth aspects, in which
in the preparing the positive electrode slurry, 5.0 wt% or less of the ytterbium compound is added to the nickel hydroxide in which Mn is solid-dissolved, and
in the injecting the alkaline electrolyte solution, the amount of the electrolyte solution is 3.0 mL/Ah or less with respect to the capacity of the positive electrode.

According to a twelfth aspect of the present invention, there is provided a method for producing a nickel hydrogen secondary battery including a positive electrode containing nickel hydroxide as an active material, a negative electrode containing a hydrogen storage alloy as an active material, and an alkaline electrolyte solution, the method including:
preparing a positive electrode slurry by adding 3.0 wt% or more of an ytterbium compound to the nickel hydroxide;
preparing the positive electrode by filling a conductive core material with the positive electrode slurry, and performing drying and rolling;
preparing a negative electrode slurry by adding Mn or a Mn compound to the hydrogen storage alloy;
preparing the negative electrode by coating a conductive core material with the negative electrode slurry, and performing drying and rolling; and
injecting the alkaline electrolyte solution such that an amount of the electrolyte solution is 1.5 mL/Ah or more with respect to a capacity of the positive electrode.

According to a thirteenth aspect of the present invention, there is provided the method for producing a nickel hydrogen secondary battery according to the twelfth aspect, in which the hydrogen storage alloy contains no Mn.

According to a fourteenth aspect of the present invention, there is provided the method for producing a nickel hydrogen secondary battery according to the twelfth or thirteenth aspect, in which
in the preparing the positive electrode slurry, 5.0 wt% or less of the ytterbium compound is added to the nickel hydroxide, and
in the injecting the alkaline electrolyte solution, the amount of the electrolyte solution is 3.0 mL/Ah or less with respect to the capacity of the positive electrode.

According to the present invention, in a design in which the amount of the electrolyte solution in the battery is as large as 1.5 mL/Ah or more with respect to the capacity of the positive electrode and the positive electrode contains 3.0 wt% or more of the ytterbium compound, by solid-dissolving Mn in nickel hydroxide as the active material of the positive electrode or by containing Mn in the negative electrode, it is possible to reduce a voltage after charging the battery being left at a high temperature.

In addition, by adding Mn, it is possible to prevent a structural change of the active material of the positive electrode after the battery is left at a high temperature, and thus it is possible to produce an alkaline secondary battery in which a decrease in capacity after being left at a high temperature is prevented.

According to the present invention, by adding Mn, it is possible to design a battery in which a life extension effect is balanced with prevention of deterioration of the positive electrode.

### DESCRIPTION OF EMBODIMENTS

An alkaline secondary battery according to the present invention includes a positive electrode containing nickel hydroxide as an active material, a negative electrode, and an alkaline electrolyte solution. Examples of the alkaline secondary battery include a nickel hydrogen secondary battery containing a hydrogen storage alloy as an active material of a negative electrode and a nickel zinc secondary battery containing zinc and zinc oxide as the active material of the negative electrode.

Hereinafter, as an embodiment of the alkaline secondary battery according to the present invention and a production method therefor, a nickel hydrogen secondary battery will be described as an example.

### [First Embodiment] (Nickel Hydrogen Secondary Battery)

The nickel hydrogen secondary battery according to the present embodiment is of a non-sintered type.

The nickel hydrogen secondary battery according to the present embodiment is designed such that an amount of the electrolyte solution in the battery is 1.5 mL/Ah or more, preferably 1.5 mL/Ah or more and 3.0 mL/Ah or less, and more preferably 1.8 mL/Ah or more and 3.0 mL/Ah or less with respect to a capacity of the positive electrode.

The nickel hydrogen secondary battery according to the present embodiment includes a positive electrode, a negative electrode, and an alkaline electrolyte solution.

The positive electrode contains nickel hydroxide as an active material. Mn is solid-dissolved in nickel hydroxide. Mn is solid-dissolved in nickel hydroxide in an amount of 0.3 wt% or more and 2.0 wt% or less, and preferably 0.5 wt% or more and 1.0 wt% or less.

The positive electrode contains an ytterbium compound in an amount of 3.0 wt% or more, and preferably 3.0 wt% or more and 5.0 wt% or less, with respect to nickel hydroxide. As the ytterbium compound, for example, Yb₂O₃ or YbF₃ is used.

The content of the ytterbium compound described here is substantially equal to an additive amount of the ytterbium compound added to nickel hydroxide during preparation of the positive electrode, and an error occurring in the preparation process is allowable.

The negative electrode contains a hydrogen storage alloy containing no Mn as an active material. Examples of the hydrogen storage alloy containing no Mn include La_{0.76}Zr_{0.01}Mg_{0.24}Ni_{3.30}Al_{0.10}. The hydrogen storage alloy containing no Mn is desirably a superlattice alloy having a structure in which an AB₂ structure and an AB₅ structure are regularly stacked.

As the alkaline electrolyte solution, a solution obtained by dissolving a hydroxide of an alkali metal, such as KOH, NaOH, or LiOH, in water is generally used.

### (Method for Producing Nickel Hydrogen Secondary Battery)

In a method for producing a nickel hydrogen secondary battery according to the present embodiment, a positive electrode slurry and a negative electrode slurry are prepared, a positive electrode plate and a negative electrode plate are prepared using respective slurries, the prepared positive electrode plate and negative electrode plate are wound with a separator interposed therebetween and are then inserted into a battery can, an electrolyte solution is injected into the battery can, and then the battery can is sealed for assembly.

An amount of the alkaline electrolyte solution injected is set such that the amount of the electrolyte solution is 1.5 mL/Ah or more, and preferably 1.5 mL/Ah or more and 3.0 mL/Ah or less, with respect to the capacity of the positive electrode.

The positive electrode slurry is prepared by kneading, with a solvent, a mixture of the active material and an additive. The active material is prepared by solid-dissolving a predetermined amount of Mn in a core containing nickel hydroxide as a main component. As the additive, an ytterbium compound is used. An additive amount of the ytterbium compound is 3.0 wt% or more, and preferably 3.0 wt% or more and 5.0 wt% or less, with respect to nickel hydroxide.

The positive electrode plate is prepared by filling or coating a plate-shaped conductive core material with the positive electrode slurry and then performing drying and rolling. As the conductive core material, for example, a foamed nickel substrate or a nickel felt substrate is used.

The negative electrode slurry is prepared by mixing a hydrogen storage alloy powder containing no Mn and a solvent containing Mn or a Mn compound. An additive amount of Mn or the Mn compound is 0.5 parts by weight or more and 3.0 parts by weight or less, and preferably 1 part by weight, with respect to 100 parts by weight of the hydrogen storage alloy containing no Mn. The Mn or Mn compound may be mixed with the hydrogen storage alloy powder as a kneaded product with predetermined amounts of carbon, a binder, and a solvent.

The negative electrode plate is prepared by filling a plate-shaped conductive core material with the negative electrode slurry and then performing drying and rolling. The conductive core material is selected from, for example, a nickel punched metal and a lath metal.

### [Second Embodiment]

The present embodiment is different from the first embodiment in configurations of the positive electrode and the negative electrode. Other configurations are the same as those of the first embodiment.

The positive electrode contains nickel hydroxide as an active material. Mn is not solid-dissolved in nickel hydroxide.

The positive electrode contains an ytterbium compound in an amount of 3.0 wt% or more, and preferably 3.0 wt% or more and 5.0 wt% or less, with respect to nickel hydroxide. The ytterbium compound is, for example, Yb₂O₃.

The content of the ytterbium compound described here is substantially equal to an additive amount of the ytterbium compound added to nickel hydroxide during preparation of the positive electrode, and an error occurring in the preparation process is allowable.

The positive electrode slurry is prepared by kneading, with a solvent, a mixture of an active material containing nickel hydroxide as a main component and an additive. As the additive, an ytterbium compound is used. The additive amount of the ytterbium compound is the same as that in the first embodiment.

The negative electrode contains a hydrogen storage alloy containing no Mn as an active material. The hydrogen storage alloy containing no Mn is the same as that of the first embodiment.

The negative electrode contains Mn. A content of Mn is 0.5 parts by weight or more and 3.0 parts by weight or less, and preferably 1 part by weight, with respect to 100 parts by weight of the hydrogen storage alloy containing no Mn.

The negative electrode slurry is prepared by mixing a hydrogen storage alloy powder containing no Mn and a solvent containing Mn or a Mn compound. An additive amount of Mn or the Mn compound is 0.5 parts by weight or more and 3.0 parts by weight or less, and preferably 1 part by weight, with respect to 100 parts by weight of the hydrogen storage alloy containing no Mn. The Mn or Mn compound is formed into a kneaded product with predetermined amounts of carbon, a binder, and a solvent, which is then mixed with the hydrogen storage alloy powder.

The positive electrode plate and the negative electrode plate are prepared in the same manner as in the first embodiment.

Next, a basis for setting the nickel hydrogen secondary battery and the production method therefor described in the first embodiment and the second embodiment will be described.

A nickel hydrogen secondary battery in which Mn was solid-dissolved in the active material of the positive electrode (Test Example A), a nickel hydrogen secondary battery in which Mn was contained in the negative electrode (Test Example B), and nickel hydrogen secondary batteries in which Mn was not contained in any of the positive electrode and the negative electrode (Comparative Examples: Test Example C and Test Example D) were produced, and a high temperature intermittent charging test was performed on the nickel hydrogen secondary batteries in Test Examples A to D.

### [Production of Test Example A]

### (Positive Electrode)

Mn (0.5 wt%) was solid-dissolved in a core containing nickel hydroxide as a main component. A coating layer composed of cobalt hydroxide was formed on a surface of nickel hydroxide in which Mn was solid-dissolved.

The nickel hydroxide on which the coating layer was formed was treated with a hot alkali in air to obtain spherical particles having cobalt hydroxide on a surface thereof and having a valence of 3.2 as an active material of a positive electrode.

The active material of the positive electrode and an additive were mixed at 100:0 to 4 (parts by weight), and 0.2 parts by weight of a binder composed of a hydrophilic resin was added and mixed to obtain a mixture. As the additive, ytterbium oxide was used.

To the obtained mixture, 30 parts by weight of water was added, followed by kneading to prepare a positive electrode slurry.

A foamed nickel substrate was filled with the positive electrode slurry, and dried and rolled to prepare a positive electrode plate.

### (Negative Electrode)

Yttrium oxide (1 part by weight) was added to 1 part by weight of carbon, and 0.3 parts by weight of a binder composed of a hydrophilic resin and 40 parts by weight of water were further mixed to obtain a mixture.

To the obtained mixture, 100 parts by weight of a hydrogen storage alloy powder was added, followed by kneading to prepare a negative electrode slurry. The hydrogen storage alloy powder used here has a composition of La_{0.76}Zr_{0.01}Mg_{0.24}Ni_{3.30}Al_{0.10}, has a superlattice structure, and has a particle diameter (MV) of 35 µm.

The negative electrode slurry was applied to a punched metal core, and dried and rolled to prepare a negative electrode plate.

### (Nickel Hydrogen Secondary Battery)

The positive electrode plate and the negative electrode plate prepared as described above were wound with a separator interposed therebetween and then inserted into a battery can, an electrolyte solution was injected into the battery can such that the amount of the electrolyte solution with respect to the capacity of the positive electrode was 1.4 mL/Ah, 1.5 mL/Ah, or 1.9 mL/Ah, and then the battery can was sealed for assembly into a battery.

Aging (between assembly and activation) was performed at 40°C or lower for 12 hours.

As an activation treatment, a charging-discharging cycle, in which an operation of charging at a charging current of 100 mA for 16 hours and discharging at a discharging current of 200 mA until the battery voltage reached 1.0 V was set as one cycle, was performed five times, so as to prepare a nickel hydrogen secondary battery having an AA size (14.0 φ × 49.5 mm) and a capacity of 1,000 mAh.

### [Production of Test Example B]

### (Positive Electrode)

A coating layer composed of cobalt hydroxide was formed on a surface of a core containing nickel hydroxide as a main component.

The nickel hydroxide having the coating layer was treated with a hot alkali in air to obtain spherical particles having cobalt hydroxide on a surface thereof and having a valence of 3.2 as an active material of a positive electrode.

The active material of the positive electrode and an additive were mixed at 100:0 to 4 (parts by weight), and 0.2 parts by weight of a binder composed of a hydrophilic resin was added and mixed to obtain a mixture. As the additive, ytterbium oxide was used.

To the obtained mixture, 30 parts by weight of water was added, followed by kneading to prepare a positive electrode slurry.

A foamed nickel substrate was filled with the positive electrode slurry, and dried and rolled to prepare a positive electrode plate.

### (Negative Electrode)

Manganese oxide (Mn₂O₃, 1 part by weight) was added to 1 part by weight of carbon, and 0.3 parts by weight of a binder composed of a hydrophilic resin and 40 parts by weight of water were further mixed to obtain a mixture.

To the obtained mixture, 100 parts by weight of a hydrogen storage alloy powder was added, followed by kneading to obtain a negative electrode slurry. The hydrogen storage alloy powder used here has a composition of La_{0.76}Zr_{0.01}Mg_{0.24}Ni_{3.30}Al_{0.10}, has a superlattice structure, and has a particle diameter (MV) of 35 µm.

The negative electrode slurry was applied to a punched metal core, and dried and rolled to prepare a negative electrode plate.

### (Nickel Hydrogen Secondary Battery)

The positive electrode plate and the negative electrode plate prepared as described above were wound with a separator interposed therebetween and then inserted into a battery can, an electrolyte solution was injected into the battery can such that the amount of the electrolyte solution with respect to the capacity of the positive electrode was 1.4 mL/Ah, 1.5 mL/Ah, or 1.9 mL/Ah, and then the battery can was sealed for assembly into a battery.

Aging (between assembly and activation) was performed at 40°C or lower for 12 hours.

As an activation treatment, a charging-discharging cycle, in which an operation of charging at a charging current of 100 mA for 16 hours and discharging at a discharging current of 200 mA until the battery voltage reached 1.0 V was set as one cycle, was performed five times, so as to prepare a nickel hydrogen secondary battery having an AA size (14.0 φ × 49.5 mm) and a capacity of 1,000 mAh.

### [Production of Test Example C]

### (Positive Electrode)

An active material of a positive electrode and a positive electrode plate were prepared in the same procedure as in Test Example B.

### (Negative Electrode)

An active material of a negative electrode and a negative electrode plate were prepared in the same procedure as in Test Example A.

### (Nickel Hydrogen Secondary Battery)

A battery was assembled in the same procedure as in Test Example A, aging was performed, and an activation treatment was performed, to prepare a nickel hydrogen secondary battery.

### [Production of Test Example D]

### (Positive Electrode)

An active material of a positive electrode and a positive electrode plate were prepared in the same procedure as in Test Example B. However, in this comparative example, yttrium oxide was used as an additive instead of ytterbium oxide. The additive was mixed in an amount of 2 parts by weight or 4 parts by weight with respect to 100 parts by weight of the active material of the positive electrode.

### (Negative Electrode)

An active material of a negative electrode and a negative electrode plate were prepared in the same procedure as in Test Example A.

### (Nickel Hydrogen Secondary Battery)

A battery was assembled in the same procedure as in Test Example A, aging was performed, and an activation treatment was performed, to prepare a nickel hydrogen secondary battery.

### [High Temperature Intermittent Charging Test]

The activated nickel hydrogen secondary batteries in Test Examples A to D were each repeatedly left to left in an environment of 90°C for 4 days, then fully charged at room temperature by 0.2C charging (100 minutes + dT/dt control), and then left in an environment of 90°C for 4 days again.

After each charging, one sampling was performed, and AC resistance (AC 1 kHz) and 2 W discharging were performed at room temperature of (23±3°C) to check the life. The results are shown in Tables 1 to 4.

Note that, the nickel hydrogen secondary batteries in Test Examples A to D were designed based on the capacity of the positive electrode. It can be understood that the capacity of the positive electrode directly corresponds to the capacity of the entire battery. Therefore, the "amount of electrolyte solution with respect to capacity of positive electrode" is represented by the amount (mL) of the electrolyte solution injected/battery capacity (Ah).

In this test, the life was determined based on two criteria including internal resistance limitation and capacity limitation. The "life mode" described in Tables 1 to 4 means the criterion used to determine the life. In the case where the AC resistance (AC 1 kHz) after charging at room temperature is 50 mΩ or more, it is determined that the criterion is the internal resistance limitation. In the case where the internal resistance is 50 mΩ or less and the discharging time at 2 W and at room temperature is 40% of the initial value after the battery is left, it is determined that the criterion is the capacity limitation.

Table 1 shows the test results for Test Examples C-1 to C-21 in which Mn is not contained in the positive electrode and the negative electrode (Yb₂O₃ is added to the positive electrode).

### [Table 1]

**Table 1**

| | In positive electrode slurry | Amount of electrolyte solution with respect to capacity of positive electrode | High temperature intermittent charging test | Life mode |
|---|---|---|---|---|
| | Additive amount (%) of Yb₂O₃ | (mL/Ah) | Life (day) | |
| Test Example C-1 | 9% | 1.9 | 112 | Capacity |
| Test Example C-2 | 5% | 1.9 | 148 | Capacity |
| Test Example C-3 | 4% | 1.9 | 144 | Capacity |
| Test Example C-4 | 3% | 1.9 | 148 | Capacity |
| Test Example C-5 | 2% | 1.9 | 144 | Internal resistance |
| Test Example C-6 | 1% | 1.9 | 104 | Internal resistance |
| Test Example C-7 | 0% | 1.9 | 60 | Internal resistance |
| Test Example C-8 | 9% | 1.5 | 92 | Capacity |
| Test Example C-9 | 5% | 1.5 | 128 | Capacity |
| Test Example C-10 | 4% | 1.5 | 128 | Capacity |
| Test Example C-11 | 3% | 1.5 | 128 | Capacity |
| Test Example C-12 | 2% | 1.5 | 100 | Internal resistance |
| Test Example C-13 | 1% | 1.5 | 72 | Internal resistance |
| Test Example C-14 | 0% | 1.5 | 44 | Internal resistance |
| Test Example C-15 | 9% | 1.4 | 72 | Internal resistance |
| Test Example C-16 | 5% | 1.4 | 116 | Internal resistance |
| Test Example C-17 | 4% | 1.4 | 120 | Internal resistance |
| Test Example C-18 | 3% | 1.4 | 104 | Internal resistance |
| Test Example C-19 | 2% | 1.4 | 80 | Internal resistance |
| Test Example C-20 | 1% | 1.4 | 56 | Internal resistance |
| Test Example C-21 | 0% | 1.4 | 32 | Internal resistance |

Each group of Test Example C-1 to Test Example C-7, Test Example C-8 to Test Example C-14, and Test Example C-15 to Test Example C-21 has different amounts of the electrolyte solution with respect to the capacity of the positive electrode. In the comparative examples in one group, the additive amounts of Yb₂O₃ are different.

According to Table 1, the life of the battery is extended by adding Yb₂O₃ to the positive electrode. In addition, when comparing comparative examples in which the additive amounts of Yb₂O₃ are the same among the groups in which the amounts of the electrolyte solution with respect to the capacity of the positive electrode are different, the life of the battery is extended as the amount of the electrolyte solution with respect to the capacity of the positive electrode increases.

In comparison in each group, the life is also extended depending on the additive amount of Yb₂O₃ in the group in which the amount of the electrolyte solution in the battery is small (Test Examples C-15 to C-21). This is thought to be because the addition of Yb₂O₃ prevents corrosion of the alloy.

On the other hand, in the group in which the amount of the electrolyte solution is large with respect to the capacity of the positive electrode (in Test Examples C-1 to C-7 and Test Examples C-8 to C-14), the life is extended depending on the additive amount until the additive amount of Yb₂O₃ is 3 wt%, but even when the additive amount is further increased, the effect of extending the life is not observed (see Test Examples C-1 to C-4 and Test Examples C-8 to C-11).

In Test Examples C-1 to C-4 and Test Examples C-8 to C-11, the life mode is the capacity limitation. From this, it is thought that when the positive electrode containing a large amount of ytterbium is left in a high temperature environment, the active material of the positive electrode undergoes a structural change, and the active material cannot be smoothly charged and discharged.

Among the additives that can be added to the positive electrode, in particular, the ytterbium compound has a high effect of increasing an oxygen evolution potential and maintains a high voltage after charging the battery being left at a high temperature, which are side reactions. Therefore, the deterioration due to the structural change of the active material of the positive electrode tends to progress, which leads to a decrease in capacity.

According to the results for Test Examples C-15 to C-21, the alloy corrosion prevention effect of the ytterbium compound is particularly large at 3.0 wt% or more. However, from the results for Test Examples C-1 to C-4 and Test Examples C-8 to C-11, it is found that the decrease in capacity due to the structural change of the active material of the positive electrode tends to increase as the additive amount of the ytterbium compound increases.

Table 2 shows the test results for Test Examples D-1 to D-9 in which Mn is not contained in the positive electrode and the negative electrode (Y₂O₃ is added to the positive electrode).

### [Table 2]

**Table 2**

| | In positive electrode slurry | Amount of electrolyte solution with respect to capacity of positive electrode | High temperature intermittent charging test | Life mode |
|---|---|---|---|---|
| | Additive amount (%) of Y₂O₃ | (mL/Ah) | Life (day) | |
| Test Example D-1 | 4% | 1.9 | 128 | Internal resistance |
| Test Example D-2 | 2% | 1.9 | 132 | Internal resistance |
| Test Example D-3 | 0% | 1.9 | 60 | Internal resistance |
| Test Example D-4 | 4% | 1.5 | 92 | Internal resistance |
| Test Example D-5 | 2% | 1.5 | 96 | Internal resistance |
| Test Example D-6 | 0% | 1.5 | 44 | Internal resistance |
| Test Example D-7 | 4% | 1.4 | 72 | Internal resistance |
| Test Example D-8 | 2% | 1.4 | 80 | Internal resistance |
| Test Example D-9 | 0% | 1.4 | 32 | Internal resistance |

Each group of Test Example D-1 to Test Example D-3, Test Example D-4 to Test Example D-6, and Test Example D-7 to Test Example D-9 has different amounts of the electrolyte solution with respect to the capacity of the positive electrode. In the comparative examples in one group, the additive amounts of Y₂O₃ are different.

According to Table 2, the life of the battery is extended by adding Y₂O₃ to the positive electrode and increasing the amount of the electrolyte solution with respect to the capacity of the positive electrode. However, in Table 2, no extension of the life of the battery is observed depending on the increase in the additive amount of Y₂O₃.

Table 3 shows the test results for Test Examples A-1 to A-21 in which 0.5% of Mn is solid-dissolved in the active material of the positive electrode.

### [Table 3]

**Table 3**

| | In active material of positive electrode | In positive electrode slurry | Amount of electrolyte solution with respect to capacity of positive electrode |
|---|---|---|---|
| | Solid-dissolved Mn (%) | Additive amount (%) of Yb₂O₃ | (mL/Ah) |
| Test Example A-1 | 0.50% | 9% | 1.9 |
| Test Example A-2 | 0.50% | 5% | 1.9 |
| Test Example A-3 | 0.50% | 4% | 1.9 |
| Test Example A-4 | 0.50% | 3% | 1.9 |
| Test Example A-5 | 0.50% | 2% | 1.9 |
| Test Example A-6 | 0.50% | 1% | 1.9 |
| Test Example A-7 | 0.50% | 0% | 1.9 |
| Test Example A-8 | 0.50% | 9% | 1.5 |
| Test Example A-9 | 0.50% | 5% | 1.5 |
| Test Example A-10 | 0.50% | 4% | 1.5 |
| Test Example A-11 | 0.50% | 3% | 1.5 |
| Test Example A-12 | 0.50% | 2% | 1.5 |
| Test Example A-13 | 0.50% | 1% | 1.5 |
| Test Example A-14 | 0.50% | 0% | 1.5 |
| Test Example A-15 | 0.50% | 9% | 1.4 |
| Test Example A-16 | 0.50% | 5% | 1.4 |
| Test Example A-17 | 0.50% | 4% | 1.4 |
| Test Example A-18 | 0.50% | 3% | 1.4 |
| Test Example A-19 | 0.50% | 2% | 1.4 |
| Test Example A-20 | 0.50% | 1% | 1.4 |
| Test Example A-21 | 0.50% | 0% | 1.4 |

**Table 3 (continued)**

| | High temperature intermittent charging test | Life difference with Test Example C | Life mode |
|---|---|---|---|
| | Life (day) | | |
| Test Example A-1 | 172 | 60 | Internal resistance |
| Test Example A-2 | 238 | 90 | Internal resistance |
| Test Example A-3 | 234 | 90 | Internal resistance |
| Test Example A-4 | 188 | 40 | Internal resistance |
| Test Example A-5 | 140 | -4 | Internal resistance |
| Test Example A-6 | 92 | -12 | Internal resistance |
| Test Example A-7 | 56 | -4 | Internal resistance |
| Test Example A-8 | 112 | 20 | Internal resistance |
| Test Example A-9 | 140 | 12 | Internal resistance |
| Test Example A-10 | 144 | 16 | Internal resistance |
| Test Example A-11 | 132 | 4 | Internal resistance |
| Test Example A-12 | 96 | -4 | Internal resistance |
| Test Example A-13 | 64 | -8 | Internal resistance |
| Test Example A-14 | 40 | -4 | Internal resistance |
| Test Example A-15 | 64 | -8 | Internal resistance |
| Test Example A-16 | 112 | -4 | Internal resistance |
| Test Example A-17 | 112 | -8 | Internal resistance |
| Test Example A-18 | 100 | -4 | Internal resistance |
| Test Example A-19 | 76 | -4 | Internal resistance |
| Test Example A-20 | 48 | -8 | Internal resistance |
| Test Example A-21 | 28 | -4 | Internal resistance |

Each group of Test Example A-1 to Test Example A-7, Test Example A-8 to Test Example A-14, and Test Example A-15 to Test Example A-21 has different amounts of the electrolyte solution with respect to the capacity of the positive electrode. In the comparative examples in one group, the additive amounts of Yb₂O₃ are different.

The "life difference from Test Example C" in Table 3 is a value obtained by subtracting the life of each of Test Example C-1 to Test Example C-21 in Table 1 from the life of each of Test Example A-1 to Test Example A-21.

According to Table 3, even in the case where Mn is solid-dissolved in the active material of the positive electrode, as in Test Example C in which Mn is not solid-dissolved, the life of the battery is extended with the addition of Yb₂O₃ and the increase in the amount of the electrolyte solution with respect to the capacity of the positive electrode.

According to Table 3, in Test Examples A-1 to A-4 and Test Examples A-8 to A-11, in which the amount of the electrolyte solution with respect to the capacity of the positive electrode is 1.5 mL/Ah or more and the additive amount of Yb₂O₃ in the positive electrode is designed to be 3.0 wt% or more, the life can be extended as compared with Test Examples C-1 to C-4 and Test Examples C-8 to C-11 in Table 1.

In addition, when comparing Test Examples A-1 to A-4 and Test Examples A-8 to A-11, even when the additive amount of Yb₂O₃ is 3.0 wt% or more, the effect of extending the life due to the increase in the additive amount is recognized.

According to Table 3, the life modes of Test Examples A-1 to A-4 and Test Examples A-8 to A-11, in which the amount of the electrolyte solution with respect to the capacity of the positive electrode is designed to be 1.5 mL/Ah or more, are the internal resistance limitation.

These results suggest that the decrease in capacity of the active material of the positive electrode caused by adding a large amount of Yb₂O₃ can be prevented by solid-dissolving Mn in the active material of the positive electrode.

On the other hand, in Test Examples A-15 to A-18 in which the amount of the electrolyte solution with respect to the capacity of the positive electrode is designed to be 1.4 mL/Ah, the effect of extending the life is not found with respect to Test Examples C-15 to C-18 in Table 1 in which 3.0 wt% or more of Yb₂O₃ is added to the positive electrode.

These suggest that, in a design in which the amount of the electrolyte solution with respect to the capacity of the positive electrode is less than 1.5 mL/Ah, the effect of extending the life by solid-dissolving Mn in the active material of the positive electrode cannot be obtained.

Table 4 shows the test results for Test Examples B-1 and B-2 in which 1.0 wt% of Mn₂O₃ is added to the negative electrode slurry.

### [Table 4]

**Table 4 (continues)**

| | In positive electrode slurry | In negative electrode slurry | Amount of electrolyte solution with respect to capacity of positive electrode |
|---|---|---|---|
| | Additive amount (%) of Yb₂O₃ | Additive amount (%) of Mn₂O₃ | (mL/Ah) |
| Test Example B-1 | 4% | 1% | 1.9 |
| Test Example B-2 | 3% | 1% | 1.9 |

**Table 4 (continued)**

| | High temperature intermittent charging test | Life difference with Test Example C | Life mode |
|---|---|---|---|
| | Life (day) | | |
| Test Example B-1 | 220 | 76 | Internal resistance |
| Test Example B-2 | 172 | 24 | Internal resistance |

The additive amount of Yb₂O₃ added to the negative electrode slurry is different between Test Example B-1 and Test Example B-2.

According to Table 4, it is found that even in the case where the Mn compound is added to the negative electrode slurry, the effects of preventing the deterioration of the electrode and extending the life are obtained as in the case where Mn is solid-dissolved in the active material of the positive electrode.

According to the results for Test Example A and Test Example B, in a design in which the amount of the electrolyte solution in the battery is 1.5 ml/Ah or more with respect to the capacity of the positive electrode and the positive electrode contains 3.0 wt% or more of the ytterbium compound, by solid-dissolving Mn in the active material of the positive electrode or containing Mn in the negative electrode, it is possible to produce a nickel hydrogen secondary battery capable of preventing a decrease in capacity and reducing a voltage after charging the battery being left at a high temperature.

For in-vehicle applications that are highly desired to be used in a high temperature environment, an alloy composition containing no Co is suitable in consideration of properties such as a decrease in self-discharge properties after being left. In in-vehicle applications, since low temperature discharge properties are also required at the same time as the extension of the life, as an alloy containing no Mn, it is suitable to use a superlattice alloy having a structure in which an AB₂ structure and an AB₅ structure are regularly stacked, which is less likely to be pulverized at the time of alloy deterioration and has a high degree of activity after activation.

In addition, in the alkaline secondary battery, in a configuration of a nickel zinc secondary battery in which zinc is used as the active material of the negative electrode, it is often undesirable to contain Mn in the negative electrode due to storage properties or the like, and a configuration in which Mn is solid-dissolved in the positive electrode is suitable.

## Claims

1. An alkaline secondary battery comprising:
a positive electrode containing nickel hydroxide as an active material;
a negative electrode; and
an alkaline electrolyte solution, wherein
the positive electrode contains 3.0 wt% or more of an ytterbium compound with respect to the nickel hydroxide,
Mn is solid-dissolved in the nickel hydroxide, and
an amount of the alkaline electrolyte solution is 1.5 mL/Ah or more with respect to a capacity of the positive electrode.

2. The alkaline secondary battery according to claim 1, wherein an active material of the negative electrode is either a hydrogen storage alloy or a combination of zinc and zinc oxide.

3. The alkaline secondary battery according to claim 1, wherein an active material of the negative electrode is a hydrogen storage alloy containing no Mn.

4. The alkaline secondary battery according to any one of claims 1 to 3, wherein the positive electrode contains 5.0 wt% or less of the ytterbium compound with respect to the nickel hydroxide, and
the amount of the alkaline electrolyte solution is 3.0 mL/Ah or less with respect to the capacity of the positive electrode.

5. A nickel hydrogen secondary battery comprising:
a positive electrode containing nickel hydroxide as an active material;
a negative electrode containing a hydrogen storage alloy as an active material; and
an alkaline electrolyte solution, wherein
the positive electrode contains 3.0 wt% or more of an ytterbium compound with respect to the nickel hydroxide,
the negative electrode contains Mn, and
an amount of the alkaline electrolyte solution is 1.5 mL/Ah or more with respect to a capacity of the positive electrode.

6. The nickel hydrogen secondary battery according to claim 5, wherein the hydrogen storage alloy contains no Mn.

7. The nickel hydrogen secondary battery according to claim 5 or 6, wherein the positive electrode contains 5.0 wt% or less of the ytterbium compound with respect to the nickel hydroxide, and
the amount of the alkaline electrolyte solution is 3.0 mL/Ah or less with respect to the capacity of the positive electrode.

8. A method for producing an alkaline secondary battery including a positive electrode containing nickel hydroxide as an active material, a negative electrode, and an alkaline electrolyte solution, the method comprising:
preparing a positive electrode slurry by adding 3.0 wt% or more of an ytterbium compound to the nickel hydroxide in which Mn is solid-dissolved;
preparing the positive electrode by coating or filling a conductive core material with the positive electrode slurry; and
injecting the alkaline electrolyte solution such that an amount of the electrolyte solution is 1.5 mL/Ah or more with respect to a capacity of the positive electrode.

9. The method for producing an alkaline secondary battery according to claim 8, wherein either a hydrogen storage alloy or a combination of zinc and zinc oxide is used as an active material of the negative electrode.

10. The method for producing an alkaline secondary battery according to claim 8, wherein a hydrogen storage alloy containing no Mn is used as an active material of the negative electrode.

11. The method for producing an alkaline secondary battery according to any one of claims 8 to 10, wherein
in the preparing the positive electrode slurry, 5.0 wt% or less of the ytterbium compound is added to the nickel hydroxide in which Mn is solid-dissolved, and
in the injecting the alkaline electrolyte solution, the amount of the electrolyte solution is 3.0 mL/Ah or less with respect to the capacity of the positive electrode.

12. A method for producing a nickel hydrogen secondary battery including a positive electrode containing nickel hydroxide as an active material, a negative electrode containing a hydrogen storage alloy as an active material, and an alkaline electrolyte solution, the method comprising:
preparing a positive electrode slurry by adding 3.0 wt% or more of an ytterbium compound to the nickel hydroxide;
preparing the positive electrode by filling a conductive core material with the positive electrode slurry, and performing drying and rolling;
preparing a negative electrode slurry by adding Mn or a Mn compound to the hydrogen storage alloy;
preparing the negative electrode by coating a conductive core material with the negative electrode slurry, and performing drying and rolling; and
injecting the alkaline electrolyte solution such that an amount of the electrolyte solution is 1.5 mL/Ah or more with respect to a capacity of the positive electrode.

13. The method for producing a nickel hydrogen secondary battery according to claim 12, wherein the hydrogen storage alloy contains no Mn.

14. The method for producing a nickel hydrogen secondary battery according to claim 12 or 13, wherein
in the preparing the positive electrode slurry, 5.0 wt% or less of the ytterbium compound is added to the nickel hydroxide, and
in the injecting the alkaline electrolyte solution, the amount of the electrolyte solution is 3.0 mL/Ah or less with respect to the capacity of the positive electrode.
